# EUROPEAN PATENT APPLICATION

(11) **EP 4 769 580 A1**
(43) Date of publication of application: **01.07.2026**
(21) Application number: 25206804.4
(22) Date of filing: 06.10.2025
(51) Int. Cl.: H01M 4/66, C25D 1/04, C25D 3/38

(54) **COPPER FOIL, ELECTRODE COMPRISING THE SAME, SECONDARY BATTERY COMPRISING THE SAME, AND METHOD OF MANUFACTURING THE SAME**

(30) Priority: 30.12.2024 KR 20240201192
(71) Applicant: SK Nexilis Co., Ltd., Jeollabuk-do 56137 (KR)
(72) Inventor: JIN, Shan Hua, 56137 Jeongeup-si (KR); KIM, Taeyeong, 56137 Jeongeup-si (KR)
(74) Representative: Prüfer & Partner mbB Patentanwälte · Rechtsanwälte

(57) **Abstract**

One embodiment of the present disclosure provides a copper foil having a first surface and a second surface and including a copper film having a matte surface facing the first surface and a shiny surface facing the second surface; and a protective layer disposed on the copper film, wherein the copper foil has a specular reflectivity of 1.0 to 30.0 on the first surface. The specular reflectivity refers to a value obtained by subtracting a brightness index measured in a specular component excluded (SCE) mode from a brightness index measured in a specular component included (SCI) mode, and is measured using a colorimeter.

## Description

### BACKGROUND

### Field of the Invention

The present disclosure relates to a copper foil, an electrode including the same, a secondary battery including the same, and a method of manufacturing the same.

### Discussion of the Related Art

A secondary battery is a type of energy conversion device that changes electrical energy into chemical energy, stores the chemical energy, and then generates electricity by converting the chemical energy back into electrical energy when electricity is needed. The secondary battery has been used as an energy source for portable home appliances such as cell phones, laptop computers, and the like, as well as electric vehicles. The secondary battery is also called a "rechargeable battery" because it can be repeatedly charged.

Secondary batteries that have economic and environmental advantages over disposable primary batteries include lead storage batteries, nickel-cadmium secondary batteries, nickel-metal hydride secondary batteries, lithium secondary batteries, and the like.

In particular, lithium secondary batteries may store a relatively larger amount of energy relative to their size and weight compared to other secondary batteries. Therefore, the lithium secondary batteries are preferred in the field of information and communication devices whose portability and mobility are important, and their application range is also expanding to energy storage devices for hybrid and electric vehicles.

Lithium secondary batteries are used repeatedly by performing charging and discharging as one cycle. When any device is operated with a fully charged lithium secondary battery, the lithium ion secondary battery must have a high charge/discharge capacity in order to increase the operating time of the device. Therefore, research is continuously required to satisfy the ever-increasing needs of consumers regarding the charge/discharge capacity of lithium secondary batteries.

Since the battery characteristics of lithium secondary batteries vary greatly depending on the surface conditions of the copper foil used as a current collector, it is very important to improve the surface properties of the copper foil in order to improve the yield.

In particular, when the surface shape of the copper foil is uneven, the uniform coating of the active material is not achieved. When the active material is unevenly coated on the surface of the copper foil, short circuits occur during charging or discharging, or the active material is peeled off of the copper foil, which results in a decrease in yield.

### SUMMARY

Accordingly, the present disclosure relates to a copper foil capable of preventing the problems caused by the limitations and disadvantages of the related art described above, an electrode including the same, a secondary battery including the same, and a method of manufacturing the same.

According to one embodiment of the present disclosure, there is provided a copper foil having improved adhesion to an active material and a specular reflectivity of 1.0 to 30.0 on a first surface.

According to another embodiment of the present disclosure, there is provided a copper foil having improved adhesion to an active material and a specular reflectivity of 0.5 to 10.0 on a second surface.

According to still another embodiment of the present disclosure, there is provided an electrode for a secondary battery including the copper foil, and a secondary battery including the electrode for a secondary battery.

According to yet another embodiment of the present disclosure, there is provided a method of manufacturing a copper foil having improved adhesion to an active material, which includes: preparing an electrolyte containing copper ions; forming a copper film; and forming a protective layer on the copper film, wherein the forming of the copper film includes: forming a copper film on a rotary cathode drum by conducting current between an anode plate and a rotary cathode drum, which are arranged spaced apart from each other in an electrolyte in an electrolytic cell, the electrolyte includes 70 to 150 g/L of copper ions; 80 to 130 g/L of sulfuric acid; 15 to 25 ppm of chlorine (Cl); and an organic additive, the organic additive includes a brightener (component A), a moderator (component B), and a roughness regulator (component C), the brightener (component A) includes sulfonic acid or a metal salt thereof and has a concentration of 1 to 20 ppm, the moderator (component B) includes a non-ionic water-soluble polymer and has a concentration of 0.1 to 10 ppm, and the roughness regulator (component C) includes a nitrogen-containing heterocyclic quaternary ammonium salt or a derivative thereof and has a concentration of 1 to 10 ppm, the organic additive includes a first organic additive and a second organic additive, the first organic additive refers to an additive obtained by subjecting at least one of the moderator (component B) and the roughness regulator (component C) to forced electrolysis, and the second organic additive includes the brightener (component A), the moderator (component B), and the roughness regulator.

Another embodiment of the present disclosure provides a method of manufacturing a copper foil, in which the first organic additive and the second organic additive are added in a weight ratio of 3:1 to 10:1.

In addition to the aspects of the present disclosure described above, other features and advantages of the present disclosure will be described hereinafter or will be clearly understood from such description by those skilled in the art to which the present disclosure pertains.

One embodiment of the present disclosure provides a copper foil having a first surface and a second surface and including a copper film having a matte surface facing the first surface and a shiny surface facing the second surface; and a protective layer disposed on the copper film, wherein the copper foil has a specular reflectivity of 1.0 to 30.0 on the first surface. The specular reflectivity refers to a value obtained by subtracting a brightness index measured in a specular component excluded (SCE) mode from a brightness index measured in a specular component included (SCI) mode, and is measured using a colorimeter.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a cross-sectional view of a copper foil according to one embodiment of the present disclosure;
FIG. 2 is a cross-sectional view of an electrode for a secondary battery according to another embodiment of the present disclosure;
FIG. 3 is a cross-sectional view of an electrode for a secondary battery according to still another embodiment of the present disclosure;
FIG. 4 is a schematic cross-sectional view of a secondary battery according to yet another embodiment of the present disclosure; and
FIG. 5 shows a device for manufacturing a copper foil according to yet another embodiment of the present disclosure.

### DETAILED DESCRIPTION OF THE DISCLOSURE

Hereinafter, embodiments of the present disclosure will be described in detail with reference to the accompanying drawings. However, it should be understood that the embodiments described below are presented only for illustrative purposes to facilitate a clear understanding of the present disclosure, and are not intended to limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, it includes the plural form unless otherwise particularly specified. In interpreting the component, it is also interpreted as including an error range even when not explicitly stated.

In describing a positional relationship, for example, when the positional relationship of two parts is described as being "on," "above," "below, "next to," or the like, unless the expression "immediately" or "directly" is used, one or more other parts may be located between the two parts.

Spatially relative terms, such as "below," "beneath," "lower," "above," "upper," and the like, may be used herein to describe the relationship of one element or component to another element(s) or component(s) as shown in the drawings. It will be understood that the spatially relative terms are intended to include different orientations of an element in use or operation in addition to the orientation shown in the drawings. For example, when an element shown in the drawing is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when the temporal relationship is described as being "after," "subsequent," "next," "prior to," or the like, unless the expression "immediately" or "directly" is used, it may include cases that are not continuous.

In order to describe various components, terms such as "first," "second," and the like are used, but these components are not limited by these terms. These terms are only used to distinguish one component from another component. Therefore, a first component described hereinafter may also be a second component within the technical spirit of the present disclosure.

The term "at least one" should be understood to include all combinations that may be presented from one or more related items. For example, the meaning of "at least one of first, second, and third items" may mean not only each of the first, second or third items, but also all combinations of items that can be presented from two or more of the first, second and third items.

The terms "a matte surface" and "a shiny surface" may respectively mean relatively matte surface and relatively shiny surface when comparing both surfaces.

Respective features of various embodiments of the present disclosure may be partially or wholly coupled to or combined with each other, and may be technically linked and driven in various ways. The embodiments of the present disclosure may be carried out independently of each other, or may be carried out together in a related relationship.

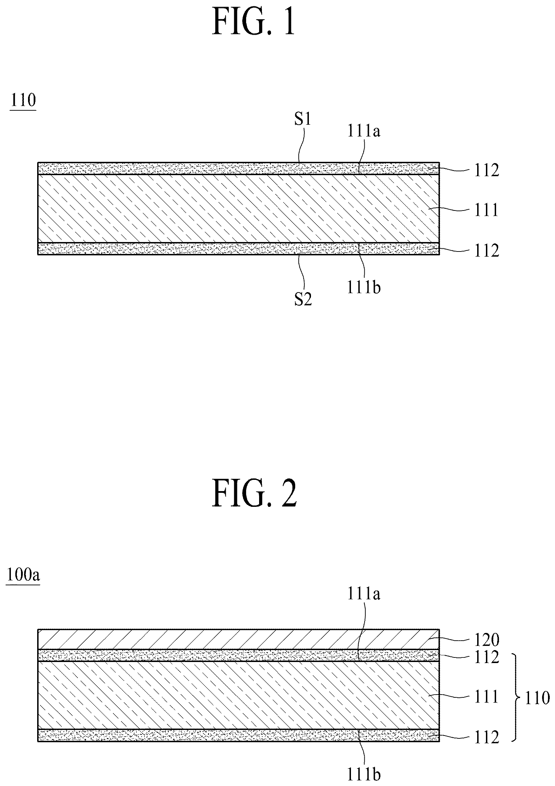

FIG. 1 is a cross-sectional view of a copper foil 110 according to one embodiment of the present disclosure.

Referring to FIG. 1, the copper foil 110 of the present disclosure includes a copper film 111 containing 99.9% by weight or more of copper. Referring to FIG. 1, the copper foil 110 of the present disclosure includes a copper film 111 and a protective layer 112 disposed on the copper film 111. FIG. 1 shows a configuration in which the protective layer 112 is disposed on both surfaces of the copper film 111. However, one embodiment of the present disclosure is not limited thereto, and the protective layer 112 may be disposed on one surface of the copper film 111.

The copper film 111 may be formed on a rotary cathode drum through electroplating, and may have a shiny surface 111b coming into direct contact with the rotary cathode drum during the electroplating process and a matte surface 111a opposite to the shiny surface 111b.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance, thereby extending the lifespan of the copper foil 110 itself as well as the lifespan of the final product including the same.

According to one embodiment of the present disclosure, the copper foil 110 has a first surface S1 in the direction of the matte surface 111a of the copper film 111 and a second surface S2 in the direction of the shiny surface 111b.

According to one embodiment of the present disclosure, the copper foil 110 may have a specular reflectivity of 1.0 to 30.0 on the first surface S1. Specifically, when the specular reflectivity on the first surface S1 of the copper foil 110 is 1.0 to 30.0, the copper foil 110 may have uniform surface properties and excellent adhesion to an active material.

According to the present disclosure, the specular reflectivity refers to a value obtained by subtracting a brightness index measured in a specular component excluded (SCE) mode from a brightness index measured in a specular component included (SCI) mode.

According to the present disclosure, the specular reflectivity is measured using a colorimeter, and is measured according to ASTM E1164 using the CM-5 Model of Konica Minolta as a measuring device.

The specific measurement conditions for the specular reflectivity are as follows:
Light Source: Xenon Lamp (D65)
Viewing Angle: 10 Degrees
Wavelength Range: 220 to 850 nm
Wavelength Interval: 10 nm
Reference: Air

The specular component included (SCI) mode is a mode used to measure the color of an object including the object's specular reflected light, and the specular component excluded (SCE) mode is a mode used to measure the color corresponding to light excluding the object's specular reflected light (diffuse reflected light).

When the specular reflectivity on the first surface S1 of the copper foil is less than 1.0, the surface of the copper foil may be excessively uneven. Specifically, a lower specular reflectivity of the copper foil may mean that light is scattered and reflected in various directions. As a result, the active material may be unevenly coated on the surface of the copper foil, which may cause a short circuit during charging or discharging or may cause the active material to be peeled off of the copper foil. In other words, the adhesion between the copper foil and the active material may be reduced.

When the specular reflectivity on the first surface S1 of the copper foil is greater than 30.0, the surface of the copper foil may be excessively smooth. A higher specular reflectivity of the copper foil may mean that light is mostly reflected in one direction. When the surface of the copper foil is excessively smooth, the active material may not spread well on the surface of the copper foil, which may result in reduced adhesion between the copper foil and the active material.

According to one embodiment of the present disclosure, the copper foil 110 may have a specular reflectivity of 0.5 to 10.0 on the second surface S2. Specifically, when the specular reflectivity on the second surface S2 of the copper foil (110) is 0.5 to 10.0, the copper foil 110 may have uniform surface characteristics and excellent adhesion to an active material.

When the specular reflectivity on the second surface S2 of the copper foil is less than 0.5, the surface of the copper foil may be excessively uneven. Specifically, a lower specular reflectivity of the copper foil may mean that light is scattered and reflected in various directions. As a result, the active material may be unevenly coated on the surface of the copper foil, which may cause a short circuit during charging or discharging or may cause the active material to be peeled off of the copper foil. In other words, the adhesion between the copper foil and the active material may be reduced.

When the specular reflectivity on the second surface S2 of the copper foil is greater than 10.0, the surface of the copper foil may be excessively smooth. A higher specular reflectivity of the copper foil may mean that light is mostly reflected in one direction. When the surface of the copper foil is excessively smooth, the active material may not spread well on the surface of the copper foil, which may result in reduced adhesion between the copper foil and the active material.

According to one embodiment of the present disclosure, the copper foil 110 has a thickness of 3 to 35 µm. When the copper foil 110 is used as a current collector of an electrode in the secondary battery, the thinner the copper foil 110, the more current collectors may be accommodated in the same space, which is advantageous for increasing the capacity of the secondary battery. However, the manufacture of a copper foil 110 having a thickness of less than 3 µm causes a decrease in workability.

On the other hand, when a secondary battery is manufactured with a copper foil 110 having a thickness of greater than 35 µm, it is difficult to achieve high capacity due to the thick copper foil 110.

Hereinafter, an electrode 100 including the copper foil 110 of the present disclosure and a secondary battery including the electrode 100 will be described in detail.

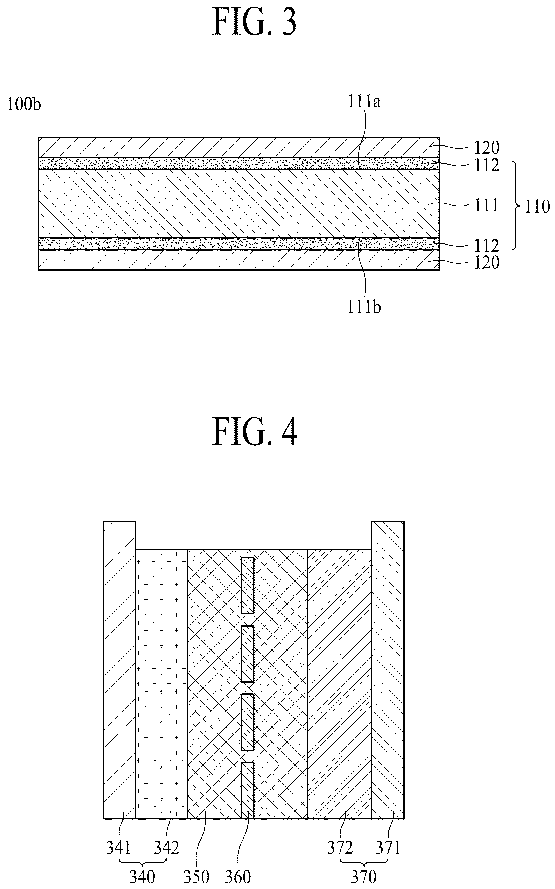

FIG. 2 is a cross-sectional view of an electrode 100a for a secondary battery according to one embodiment of the present disclosure. FIG. 3 is a cross-sectional view of an electrode 100b for a secondary battery according to another embodiment of the present disclosure.

As shown in FIG. 2, the electrode 100a for a secondary battery according to one embodiment of the present disclosure includes the copper foil 110 according to of any one of the embodiments of the present disclosure described above, and an active material layer 120.

FIG. 2 shows a configuration in which the active material layer 120 is formed on one surface of the copper foil 110, but one embodiment of the present disclosure is not limited thereto. Referring to FIG. 3, the active material layer 120 may be formed on both surfaces of the copper foil 110.

In lithium secondary batteries, an aluminum foil is generally used as a cathode current collector combined with a cathode active material, and a copper foil 110 is generally used as an anode current collector combined with an anode active material.

According to one embodiment of the present disclosure, the electrode 100 for a secondary battery is an anode, and the copper foil 110 is used as an anode current collector. In this case, the active material layer 120 includes an anode active material.

To secure the high capacity of the secondary battery, the active material layer 120 of the present disclosure may be formed of a composite of carbon and a metal. The metal may include, for example, at least one of Si, Ge, Sn, Li, Zn, Mg, Cd, Ce, Ni, and Fe, preferably Si and/or Sn.

FIG. 4 is a schematic cross-sectional view of a secondary battery according to one embodiment of the present disclosure.

Referring to FIG. 4, the secondary battery includes a cathode 370, an anode 340, an electrolyte 350 disposed between the cathode 370 and the anode 340 to provide an environment in which ions can move, and a separator 360 configured to electrically insulate the anode 370 and the cathode 340. Here, the ions moving between the cathode 370 and the anode 340 are, for example, lithium ions. The separator 360 separates the cathode 370 and the anode 340 to prevent the charges generated at one electrode from being consumed unnecessarily by moving to the other electrode through the inside of the secondary battery 105. Referring to FIG. 4, the separator 360 is disposed within the electrolyte 350.

The cathode 370 includes a cathode current collector 371 and a cathode active material layer 372. Here, an aluminum foil may be used as the cathode current collector 371.

The anode 340 includes an anode current collector 341 and an anode active material layer 342. Here, the copper foil 110 may be used as the anode current collector 341.

According to one embodiment of the present disclosure, the copper foil 110 shown in FIG. 1 may be used as the anode current collector 341. Also, the electrode 100a or 100b for a secondary battery shown in FIG. 2 or 3 may be used as the anode 340 of the secondary battery shown in FIG. 4.

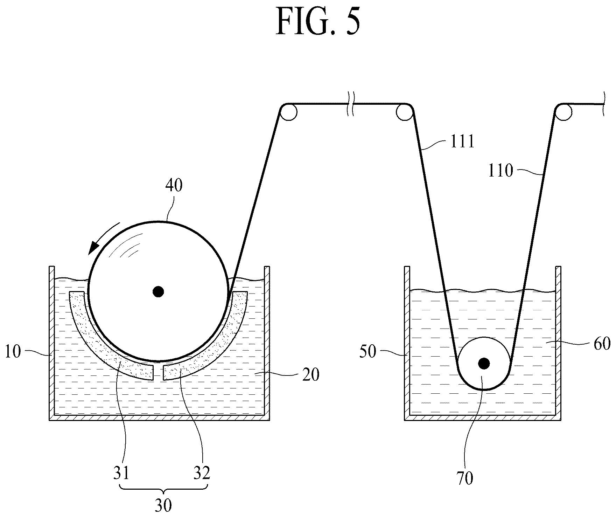

Hereinafter, a method of manufacturing a copper foil 110 of the present disclosure will be described in detail with reference to FIG. 5.

The method of manufacturing a copper foil 110 of the present disclosure includes: forming a copper film 111; and forming a protective layer 112 on the copper film 111.

The method of the present disclosure includes: forming a copper film 111 on a rotary cathode drum 40 by conducting current between an anode plate 30 and the rotary cathode drum 40, which are spaced apart from each other in an electrolyte 20 within an electrolytic cell 10.

As shown in FIG. 5, the anode plate 30 may include first and second anode plates 31 and 32 that are electrically insulated from each other.

The forming of the copper film 111 may be performed by forming a seed layer by conducting current between the first anode plate 31 and the rotary cathode drum 40, and then growing the seed layer by conducting current between the second anode plate 32 and the rotary cathode drum 40.

The current density provided by each of the first and second anode plates 31 and 32 may be 40 to 130 ASD (A/dm²).

When the current density provided by each of the first and second anode plates 31 and 32 is less than 40 ASD, the adhesive strength between the copper foil 110 and the active material layer 120 may not be sufficient due to the low surface roughness of the copper foil 110.

On the other hand, when the current density provided by each of the first and second anode plates 31 and 32 is greater than 130 ASD, the coating of the active material may not be smoothly performed due to the rough surface of the copper foil 110.

The surface properties of the copper film 111 may vary depending on the degree of surface buffing or polishing of the rotary cathode drum 40. For example, the surface of the rotary cathode drum 40 may be polished with a polishing brush having a grit of #800 to #3000.

In the process of forming the copper film 111, the electrolyte 20 is maintained at a temperature of 40 to 65°C. More specifically, the temperature of the electrolyte 20 may be maintained at 45°C or higher. At this time, the physical, chemical, and electrical properties of the copper film 111 may be controlled by adjusting the composition of the electrolyte 20.

According to one embodiment of the present disclosure, the electrolyte 20 may include copper ions, sulfuric acid, chlorine, and an organic additive.

To facilitate the formation of the copper film 111 through the electrodeposition of copper, the concentration of copper ions and the concentration of sulfuric acid in the electrolyte 20 are adjusted to 70 to 150 g/L and 80 to 130 g/L, respectively.

According to one embodiment of the present disclosure, chlorine (Cl) includes both chloride ions (Cl-) and chlorine atoms present in the molecule. Chlorine (Cl) may be used, for example, to remove silver (Ag) ions introduced into the electrolyte 20 during the process of forming the copper film 111. Specifically, chlorine (Cl) may precipitate silver (Ag) ions in the form of silver chloride (AgCl). This silver chloride (AgCl) may be removed by filtration.

When the concentration of chlorine (Cl) is less than 15 ppm, the removal of silver (Ag) ions is not smoothly performed. On the other hand, when the concentration of chlorine (Cl) is greater than 25 ppm, an unnecessary reaction caused by excessive chlorine (Cl) may occur. Therefore, the concentration of chlorine (Cl) in the electrolyte 20 is controlled to be in the range of 15 to 25 ppm.

According to one embodiment of the present disclosure, the electrolyte 20 may include an organic additive.

The organic additive included in the electrolyte 20 includes a brightener (component A), a moderator (component B), and a roughness regulator (component C).

The brightener (component A) includes sulfonic acid or a metal salt thereof. The brightener (component A) may have a concentration of 1 to 15 ppm in the electrolyte 20. The brightener (component A) may also include an alcohol ether structure or a thiocarbonyl bond structure (C=S).

The brightener (component A) may increase the quantity of charges in the electrolyte 20, thereby increasing the electrodeposition speed of copper, improving the curling characteristics of the copper foil, and enhancing the gloss of the copper foil 110. When the concentration of the brightener (component A) is less than 1 ppm, the gloss of the copper foil 110 deteriorates. On the other hand, when the concentration of the brightener (component A) is greater than 15 ppm, the weight or the surface roughness of the copper foil 110 may change after immersion.

The brightener may include, for example, at least one of a bis-(3-sulfopropyl)-disulfide disodium salt, 3-mercapto-1-propanesulfonic acid and 3-(N,N-dimethylthiocarbamoyl)-thiopropanesulfonate sodium salt, thioglycolic acid, 3,3-thiobis-(1-propyonic acid, disodium salt), a 3-(benzthiazolyl-2-thio)-propanesulfonic acid sodium salt, and a bis-(p-sulfophenyl)disulfide disodium salt.

The moderator (component B) includes a non-ionic water-soluble polymer. The moderator (component B) may have a concentration of 0.1 to 10 ppm in the electrolyte 20.

The moderator (component B) reduces the electrodeposition speed of copper to prevent a rapid increase in roughness and a decrease in strength of the copper foil 110. This moderator (component B) is also called an inhibitor or suppressor.

When the concentration of the moderator (component B) is less than 0.1 ppm, the roughness of the copper foil 110 may increase rapidly, and a problem of a change in the surface state of the copper foil 110 may occur. On the other hand, even when the concentration of the moderator (component B) is greater than 10 ppm, there are almost no changes in the physical properties of the copper foil 110, such as appearance, gloss, roughness, strength, elongation, and the like. Therefore, the concentration of the moderator (component B) may be adjusted to a range of 0.1 to 10 ppm without unnecessarily increasing the concentration of the moderator (component B) to increase the manufacturing cost and waste raw materials.

The moderator (component B) may include at least one non-ionic water-soluble polymer selected from, for example, polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of moderator is not limited thereto, and other non-ionic water-soluble polymers that may be used for the manufacture of a high-strength copper foil 110 may be used as the moderator.

The roughness regulator (component C) includes a nitrogen-containing heterocyclic quaternary ammonium salt or a derivative thereof. Specifically, the roughness regulator (component C) may include a compound of the primary amine, secondary amine or tertiary amine type, and may also include any one of collagen and gelatin.

For example, the roughness regulator (component C) may include one or more of urea, thiourea, ethylene thiourea, diethylthiourea, polyethyleneimine, and dimethyl acrylamide.

The roughness regulator (component C) improves the gloss and flatness of the copper foil 110. The roughness regulator (component C) may have a concentration of 1 to 10 ppm in the electrolyte 20.

When the concentration of the roughness regulator (component C) is less than 1 ppm, the problem occurs in which the gloss and flatness improvement effects of the copper foil 110 do not appear. On the other hand, when the concentration of the roughness regulator (component C) is greater than 10 ppm, the surface gloss of the copper foil 110 may become uneven and the surface roughness of the copper foil 110 may rapidly increase.

The roughness regulator (component C) may also include any one of compounds represented by the following Chemical Formulas 1 to 5.

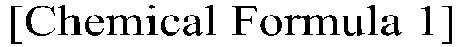

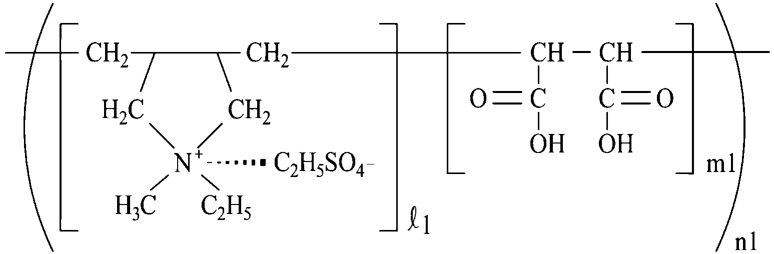

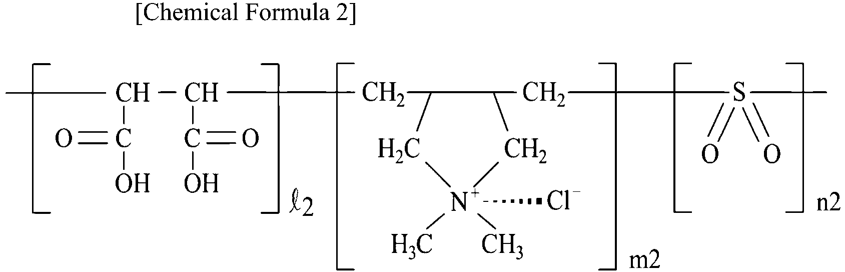

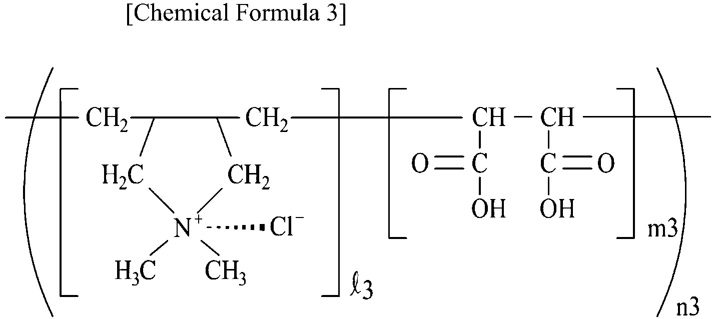

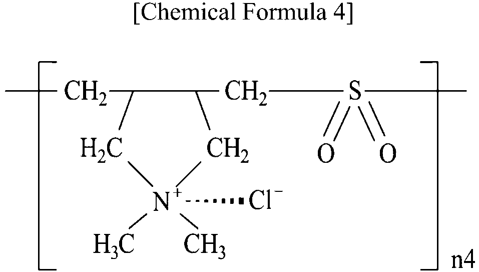

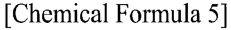

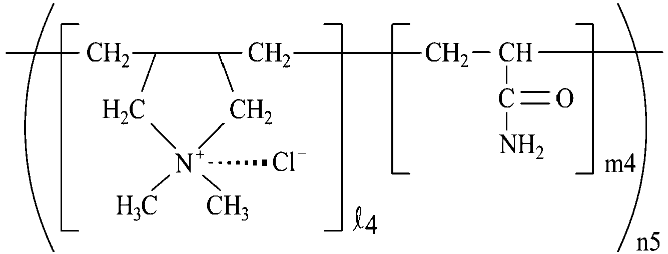

In Chemical Formulas 1 to 5, ℓ 1 to ℓ 4, m1 to m4, and n1 to n5 each represent a repeating unit and are integers greater than or equal to 1, which may be the same or different.

According to one embodiment of the present disclosure, each of the compounds represented by Chemical Formulas 1 to 5 has a number average molecular weight of 500 to 12,000.

When the number average molecular weight of the compounds represented by Chemical Formulas 1 to 5 used as the roughness regulator is less than 500, the surface roughness of the copper foil 110 may increase due to the high ratio of monomers. When the content of the roughness regulator is low, the surface roughness of the copper film 111 may increase, which results in deteriorated gloss and flatness.

When the number average molecular weight of the compounds represented by Chemical Formulas 1 to 5 is greater than 12,000, the deviation in surface roughness of the copper foil 110 increases. In this case, even when the concentrations of other additives are adjusted, it is difficult to suppress the deviation in surface roughness of the copper foil 110 from increasing.

The compounds represented by Chemical Formulas 1 to 5 may be, for example, manufactured by polymerization or copolymerization using diallyl dimethyl ammoniumchloride (DDAC).

The compound represented by Chemical Formula 1 includes, for example, PAS-2451 (Mw: 30,000, Nittobo Corporation), and the like.

The compound represented by Chemical Formula 2 includes, for example, PAS-84 (Mw: 20,000, Nittobo Corporation), and the like.

The compound represented by Chemical Formula 3 includes, for example, PAS-2351 (Mw: 25,000, Nittobo Corporation), and the like.

The compound represented by Chemical Formula 4 includes, for example, PAS-A-1 (Mw: 5,000, Nittobo Corporation), PAS-A-5 (Mw: 4,000, Nittobo Corporation), and the like.

The compound represented by Chemical Formula 5 includes, for example, PAS-J-81 (Mw: 180,000, Nittobo Corporation), and the like.

When the copper film 111 is formed, the flow rate of the electrolyte 20 supplied into the electrolytic cell 10 may be 41 to 45 m3/hour.

According to one embodiment of the present disclosure, the electrolyte 20 may be used by mixing a first organic additive and a second organic additive. For example, the first organic additive refers to an additive obtained by subjecting one or both of the moderator (component B) and the roughness regulator (component C) to forced electrolysis. The second organic additive refers to an additive other than the first organic additive, which is not electrolyzed. For example, the second organic additive may include the brightener (component A), the moderator (component B), and the roughness regulator (component C) among the organic additives.

Hereinafter, the first organic additive may be referred to as a deterioration additive, and the second organic additive may be referred to as a fresh additive.

According to the present disclosure, the forced electrolysis conditions are as follows:
- Current: 50 A
- Time: 10 to 100 hr
- Rectifier Manufacturer: Unicorn TMI
- Rectifier Model Name: MRI-20150A

The forced electrolysis may be performed by adding one or both of the moderator (component B) and the roughness regulator (component C) into an acid-resistant container to prepare 1 wt% to 10 wt% of an aqueous solution and then applying electricity thereto.

According to one embodiment of the present disclosure, the first organic additive and the second organic additive may be added in a weight ratio (wt%) of 3:1 to 10:1.

When the first organic additive and the second organic additive are added in a weight ratio of less than 3:1, for example, when the first organic additive and the second organic additive are added in a weight ratio of 2:1, the first organic additive is added in a smaller amount and the second organic additive is added in a larger amount than required in the present disclosure. When the first organic additive is added in a small amount, the copper foil may have excellent characteristics such as strength and the like. However, since the adsorption strength of the first organic additive is stronger than that of the second organic additive, there may be a problem that the elongation properties of the copper foil deteriorate in a situation in which the proportion of the second organic additive is increased. Therefore, the physical property values that the present disclosure seeks to obtain may not be obtained.

When the first organic additive and the second organic additive are added in a weight ratio exceeding 3:1, for example, when the first organic additive and the second organic additive are added in a weight ratio of 4:1 or 5:1, the first organic additive is added in a larger amount and the second organic additive is added in a smaller amount than required in the present disclosure. At this time, the electrolyzed first organic additive may have a small number average molecular weight, and the strength characteristics of the copper foil manufactured by the electrolyte to which the first organic additive having a small number average molecular weight is added in an excessive amount may deteriorate. Therefore, the physical property values that the present disclosure seeks to obtain may not be obtained.

Also, the first organic additive may have a number average molecular weight in the range of 60 to 800, and the second organic additive may have a number average molecular weight in the range of 5,000 to 20,000.

In general, when only an additive (second organic additive) that is not electrolyzed is added to the electrolyte 20 for manufacturing the copper foil 110, a problem may occur in which the second organic additive rapidly deteriorates the moment the second organic additive is introduced into the electrolytic cell 10. As a result, the quality of the copper foil 110 may become unstable due to the uneven current density.

On the other hand, according to the present disclosure, when an electrolyzed additive (first organic additive) and a non-electrolyzed additive (second organic additive) are mixed and used in the electrolyte 20 for manufacturing the copper foil 110, the length of a polymer chain may vary while the electrolyzed additive (first organic additive) increases the connectivity and reactivity of the polymer chain. As a result, the molecular weight distribution of the polymer may be widened. When the molecular weight distribution of the polymer is widened, the electrodeposition defects occurring during the manufacture of the copper foil 110 may be reduced, and the occurrence of wrinkles or tears in the copper foil 110 may be suppressed.

For example, when the molecular weight distribution of the polymer is narrow, the adsorption strength of the organic additive is strong, which may cause defects during the electrodeposition of the copper film. Also, the current distribution of the cathode will be relatively high at the edge, and the movement speed and amount of the organic additives will be high. As a result, the adsorption strength of the organic additive increases, which may cause wrinkles or tears in the copper foil.

Also, when the molecular weight of the organic additive is excessively large, the uniform adsorbability of the organic additive deteriorates, which results in a difference in the amount of electrodeposition. As a result, wrinkles or tears may occur in the copper foil.

Therefore, in order to prevent wrinkles or tears in the copper foil 110, it is necessary to reduce the molecular weight of the organic additive and widen its molecular weight distribution.

According to the present disclosure, when the electrolyte 20 is used by mixing the first organic additive and the second organic additive, the brightener (component A) in the electrolyte 20 may be maintained at a concentration of 1 to 20 ppm, the moderator (component B) may be maintained at a concentration of 0.1 to 10 ppm, and the roughness regulator (component C) may be maintained at a concentration of 1 to 10 ppm.

To ensure the cleanliness of the electrolyte 20, a copper wire (Cu wire), which is the raw material for the electrolyte 20, may be cleaned.

According to one embodiment of the present disclosure, the preparing of the electrolyte 20 may include heat-treating a copper wire, cleaning the heat-treated copper wire with an acid, cleaning the acid-cleaned copper wire with water, and introducing the water-cleaned copper wire into sulfuric acid for an electrolyte.

More specifically, in order to maintain the cleanliness of the electrolyte 20, a high-purity (99.9% or higher) copper wire (Cu wire) is heat-treated in an electric furnace at 750°C to 850°C to burn off various organic impurities on the copper wire. Then, the heat-treated copper wire is cleaned with a 10% sulfuric acid solution for 10 to 20 minutes, and the acid-treated copper wire is cleaned using distilled water. Through these sequential processes, copper for preparing the electrolyte 20 may be prepared. The water-cleaned copper wire may be mixed with sulfuric acid for an electrolyte to prepare the electrolyte 20.

The copper film 111 manufactured as described above may be cleaned in a cleaning tank.

For example, acid cleaning to remove impurities, such as resin components or natural oxides, on the surface of the copper film 111 and water cleaning to remove the acid solution used in the acid cleaning may be performed sequentially. The cleaning process may be omitted.

Next, a protective layer 112 is formed on the copper film 111.

Referring to FIG. 5, the method of the present disclosure may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in 1 to 10 g/L of a potassium dichromate solution at room temperature for 1 to 30 seconds.

Meanwhile, the protective layer 112 may include a silane compound by silane treatment, and may also include a nitrogen compound by nitrogen treatment.

The copper foil 110 is formed by forming such a protective layer 112.

An electrode (i.e., an anode) for a secondary battery of the present disclosure may be manufactured by coating one or more anode active materials selected from the group consisting of carbon; a metal (Me) of Si, Ge, Sn, Li, Zn, Mg, Cd, Ce, Ni, or Fe; an alloy including the metal (Me); an oxide (MeOx) of the metal (Me); and a composite of the metal (Me) and carbon on one or both surfaces of the copper foil 110 of the present disclosure manufactured through the method described above.

For example, 1 to 3 parts by weight of a styrene-butadiene rubber (SBR) and 1 to 3 parts by weight of carboxymethyl cellulose (CMC) are mixed with 100 parts by weight of carbon for an anode active material, and then distilled water serving as a solvent is added to the mixture to prepare a slurry. Thereafter, the slurry is applied onto the copper foil 110 to a thickness of 20 to 60 µm using a doctor blade, and pressed at a pressure of 0.5 to 1.5 ton/cm2 at 110 to 130°C.

A secondary battery may be manufactured using the electrode (anode) for a secondary battery of the present disclosure manufactured through the above-described method, together with a conventional cathode, electrolyte, and separator.

Hereinafter, the present disclosure will be described in detail with reference to examples and comparative examples. However, it should be understood that the examples described below are only provided to aid in understanding the present disclosure, and are not intended to limit the scope of the present disclosure.

### Examples 1 to 6

A copper foil was manufactured using a plating machine including an electrolytic cell 10, a rotary cathode drum 40 disposed in the electrolytic cell 10, and an anode plate 30 disposed spaced apart from the rotary cathode drum 40. An electrolyte 20 is a copper sulfate solution. The concentration of copper ions in the electrolyte 20 was set to 87 g/L, the concentration of sulfuric acid was set to 110 g/L, the temperature of the electrolyte was set to 55°C, and the current density was set to 60 ASD.

Also, the concentration of chlorine (Cl) included in the electrolyte 20 was maintained at 20 ppm, and the concentrations of the organic additives are as shown in Table 1 below.

Among the organic additives, bis-(3-sulfopropyl)-disulfide disodium salt (SPS) was used as a brightener (component A), polyethylene glycol (PEG) was used as a moderator (component B), and a triallylmethylethylammonium ethyl sulfide maleic acid copolymer (PAS-2451TM, Nittobo Corporation, Mw.: 30,000) was used as a roughness regulator (component C).

The organic additive was used by mixing the first organic additive and the second organic additive. Electrolyzed polyethylene glycol (PEG) was used as the first organic additive, and the second organic additive included bis-(3-sulfopropyl)-disulfide disodium salt (SPS), polyethylene glycol (PEG), and a triallylmethylethylammonium ethyl sulfide maleic acid copolymer (PAS-2451TM, Nittobo Corporation, Mw.: 30,000).

The first organic additive has a number average molecular weight in the range of 62 to 500, and the second organic additive has a number average molecular weight in the range of 5,000 to 20,000.

Electrolysis was performed under the following conditions.
- Current: 50 A
- Time: 50 hr

The weight ratio of the first organic additive and the second organic additive is as shown in Table 1 below.

A copper film 111 was manufactured by applying a current at a current density of 60 ASD between the rotary cathode drum 40 and the anode plate 30. Next, the copper film 111 was immersed in an anticorrosion solution for approximately 2 seconds, and chromate treatment was performed on both surfaces of the copper film 111 to form a protective layer 112, thereby manufacturing a copper foil. An anticorrosion solution containing chromic acid as a main component was used as the anticorrosion solution, and the concentration of chromic acid was 5 g/L.

As a result, the copper foils of Examples 1 to 6 were manufactured. At this time, the manufactured copper foils had a thickness of 7 µm.

### Comparative Examples 1 and 2

The concentrations of organic additives are as shown in Table 1 below.

Copper foils were manufactured in the same manner as in Examples 1 to 4, except that the first organic additive was not added. At this time, the manufactured copper foils had a thickness of 7 µm.

### Comparative Examples 3 and 4

The concentrations of organic additive and the weight ratio of the first organic additive and the second organic additive are as shown in Table 1 below.

Copper foils were manufactured in the same manner as in Examples 1 to 6. At this time, the manufactured copper foils had a thickness of 7 µm.

**[Table 1]**

| | SPS (ppm) | PEG (ppm) | PAS-2451TM (ppm) | Whether first organic additive is added | Weight ratio of first organic additive and second organic additive |
|---|---|---|---|---|---|
| Example 1 | 10 | 5 | 5 | O | 3:1 |
| Example 2 | 11 | 6 | 5 | O | 5:1 |
| Example 3 | 12 | 6 | 5 | O | 10:1 |
| Example 4 | 10 | 4 | 5 | O | 10:1 |
| Example 5 | 10 | 4 | 5 | O | 8:1 |
| Example 6 | 10 | 4 | 5 | O | 7:1 |
| Comparative Example 1 | 10 | 5 | 5 | X | - |
| Comparative Example 2 | 11 | 6 | 5 | X | - |
| Comparative Example 3 | 12 | 6 | 5 | O | 2:1 |
| Comparative Example 4 | 10 | 4 | 5 | O | 11:1 |

**[Table 2]**

| Classification | Brightness index (first surface: SCI) | Brightness index (first surface: SCE) | Brightness index (second surface: SCI) | Brightness index (second surface: SCE) | Specular reflectivity (first surface) | Specular reflectivity (second surface) |
|---|---|---|---|---|---|---|
| Example 1 | 85.9 | 74.6 | 83.0 | 75.5 | 11.3 | 7.5 |
| Example 2 | 73.7 | 72.0 | 82.4 | 74.7 | 1.7 | 7.7 |
| Example 3 | 84.4 | 64.7 | 82.7 | 73.8 | 19.7 | 8.9 |
| Example 4 | 86.0 | 57.0 | 84.4 | 75.0 | 29.0 | 9.4 |
| Example 5 | 83.8 | 80.1 | 80.4 | 79.7 | 3.7 | 0.7 |
| Example 6 | 81.2 | 61.0 | 82.1 | 74.6 | 20.2 | 7.5 |
| Comparative Example 1 | 65.6 | 64.9 | 89.2 | 77.4 | 0.7 | 11.8 |
| Comparative Example 2 | 78.9 | 44.4 | 84 | 83.1 | 34.5 | 0.9 |
| Comparative Example 3 | 58.9 | 58.1 | 89 | 67.3 | 0.8 | 21.7 |
| Comparative Example 4 | 54.9 | 54.3 | 75.3 | 56.9 | 0.6 | 18.4 |

**[Table 3]**

| Classification | Peel strength (N/mm²) | Capacity retention rate (%) |
|---|---|---|
| Example 1 | 25.5 | 93 |
| Example 2 | 25.0 | 94 |
| Example 3 | 25.7 | 95 |
| Example 4 | 24.9 | 95 |
| Example 5 | 25.1 | 96 |
| Example 6 | 25.2 | 95 |
| Comparative Example 1 | 11.1 | 89 |
| Comparative Example 2 | 11.5 | 88 |
| Comparative Example 3 | 10.2 | 87 |
| Comparative Example 4 | 12.0 | 88 |

For the copper foils of Examples 1 to 6 and Comparative Examples 1 to 4 manufactured as described above, i) the brightness index, ii) the specular reflectivity, iii) the peel strength, and iv) the capacity retention rate were confirmed.

Samples with dimensions of 10 cm x 10 cm were obtained by cutting the copper foils.

### i) Brightness index (SCI, SCE)

The specular component included (SCI) mode is a mode used to measure the color of an object including the object's specular reflected light, and the specular component excluded (SCE) mode is a mode used to measure the color corresponding to light excluding the object's specular reflected light (diffuse reflected light).

The brightness index (SCI; first surface) refers to the brightness index measured in a specular component included (SCI) mode on the first surface of the copper foil according to the present disclosure.

The brightness index (SCE; first surface) refers to the brightness index measured in a specular component excluded (SCE) mode on the first surface of the copper foil according to the present disclosure.

The brightness index (SCI; second surface) refers to the brightness index measured in a specular component included (SCI) mode on the second surface of the copper foil according to the present disclosure.

The brightness index (SCE; second surface) refers to the brightness index measured in a specular component excluded (SCE) mode on the second surface of the copper foil according to the present disclosure.

The brightness index is measured using a colorimeter, and is measured according to ASTM E1164 using the CM-5 Model of Konica Minolta as a measuring device.

The specific measurement conditions are as follows.
Light source: Xenon lamp(D65)
Viewing Angle: 10°
Wavelength Range: 220 to 850 nm
Wavelength Interval: 10 nm
Reference: Air

### ii) Specular reflectivity

The specular reflectivity refers to a value obtained by subtracting a brightness index measured in a specular component excluded (SCE) mode from a brightness index measured in a specular component included (SCI) mode.

### iii) Peel strength

2 parts by weight of a styrene-butadiene rubber (SBR) and 2 parts by weight of carboxymethyl cellulose (CMC) were mixed with 100 parts by weight of carbon commercially available for use as an anode active material. Thereafter, distilled water serving as a solvent was added to the mixture to prepare a slurry. Using a doctor blade, the slurry was applied to the surface of a copper foil (width: 10 cm) to a thickness of approximately 60 µm, dried at 120°C for 10 minutes, and then pressed (pressure: 1 ton/cm²) to manufacture an anode.

After the active material attachment surface of an anode sample (width: 12.7 mm) was attached with double-sided tape, the peel strength between the copper foil and the active material was measured by peeling the copper foil at an angle of 90° using a universal testing machine (UTM) according to the IPC-TM-650 standard (measurement speed: 50 mm/min).

### iv) Capacity retention rate

2 parts by weight of a styrene-butadiene rubber (SBR) and 2 parts by weight of carboxymethyl cellulose (CMC) were mixed with 100 parts by weight of carbon commercially available for use as an anode active material. Thereafter, distilled water serving as a solvent was added to the mixture to prepare a slurry. Using a doctor blade, the slurry was applied to the surface of an electrolytic copper foil (width: 10 cm) to a thickness of approximately 60 µm, dried at 120°C for 10 minutes, and then pressed (pressure: 1 ton/cm2) to manufacture an anode.

Lithium manganese oxide (Li1.1Mn1.85Al0.05O4) and lithium manganese oxide having an orthorhombic crystal structure (o-LiMnO2) were mixed in a weight ratio of 90:10 to prepare a cathode active material. The cathode active material, carbon black, and polyvinylidene fluoride (PVDF) were mixed with NMP, which is an organic solvent, in a weight ratio of 85:10:5 to prepare a slurry. The slurry was applied to both surfaces of an aluminum foil having a thickness of 20 µm, and then dried to manufacture a cathode.

Also, a basic electrolyte was prepared by dissolving 1 M LiPF6 as a solute in a non-aqueous organic solvent in which ethylene carbonate (EC) and ethyl methyl carbonate (EMC) were mixed in a weight ratio of 1:2. Thereafter, 99.5% by weight of the basic electrolyte and 0.5% by weight of succinic anhydride were mixed to prepare an electrolyte.

A secondary battery was manufactured using the cathode, anode, and electrolyte manufactured as described above.

Next, for the secondary battery manufactured as described above, the capacity per g of the cathode was measured at a charge operating voltage of 4.3 V and a discharge operating voltage of 3.4 V, and a charge/discharge experiment was performed 50 times at a charge/discharge rate of 0.2 C at 50°C. Then, the capacity retention rate of the secondary battery was calculated according to Equation 1 below. Capacity retention rate (%) = (Discharge capacity at 50th time/Discharge capacity at 1st time) × 100

Referring to Tables 1 to 3, since the specular reflectivity on the first surface satisfied the range of 1.0 to 30.0 in the copper foils according to Examples 1 to 6, the capacity retention rate of the secondary battery satisfied 90% or more. However, since the specular reflectivity on the first surface did not satisfy the range of 1.0 to 30.0 in the copper foils according to Comparative Examples 1 to 4, the capacity retention rate of the secondary battery did not satisfy 90%, which is required in the industry.

The copper foil according to one embodiment of the present disclosure can have a specular reflectivity of 1.0 to 30.0 on the first surface, thereby improving the adhesion to an active material.

The copper foil according to one embodiment of the present disclosure can have a specular reflectivity of 0.5 to 10.0 on the second surface, thereby improving the adhesion to an active material.

It will be apparent to those skilled in the art to which the present disclosure pertains that the present disclosure described above is not limited to the above-described embodiments and the accompanying drawings and that various substitutions, modifications, and variations are possible without departing from the spirit and scope of the present disclosure. Accordingly, the scope of the present disclosure is defined by the appended claims, and it is intended that all variations and modifications derived from the meaning, scope, and equivalent concepts of the claims fall within the scope of the present disclosure.

### [Brief Description of Main Parts]

100: electrode for secondary battery
110: copper foil
111: copper film
112: protective layer
120: active material layer
10: electrolytic cell
20: electrolyte

## Claims

1. A copper foil having a first surface and a second surface and comprising:
a copper film having a matte surface facing the first surface and a shiny surface facing the second surface; and
a protective layer disposed on the copper film,
wherein the copper foil has a specular reflectivity of 1.0 to 30.0 on the first surface, and
the specular reflectivity refers to a value obtained by subtracting a brightness index measured in a specular component excluded (SCE) mode from a brightness index measured in a specular component included (SCI) mode, and is measured using a colorimeter.

2. The copper foil of claim 1, which has a specular reflectivity of 0.5 to 10.0 on the second surface.

3. The copper foil of claim 1 or 2, wherein the protective layer includes at least one of a chromium compound, a silane compound, and a nitrogen compound.

4. An electrode including the copper foil according to any one claim of the preceding claims.

5. A secondary battery including the electrode according to claim 4.
